# FASCICULE DE BREVET EUROPEEN

(11) **EP 1 066 485 B1**
(45) Date de publication et mention de la délivrance du brevet: **06.03.2002**
(21) Numéro de dépôt: 99901709.8
(22) Date de dépôt: 04.02.1999
(51) Int. Cl.: F16L 59/02

(54) **ARMURE COMPOSITE A BASE DE FIBRES DE CARBONE, POUR CONDUITE FLEXIBLE**
VERSTÄRKTES VERBUNDMATERIAL AUS KOHLENSTOFFASERN FÜR EINE BIEGSAME ROHRLEITUNG
COMPOSITE CARBON FIBRE BASED ARMOUR FOR FLEXIBLE PIPE

(30) Priorité: 23.03.1998 FR 9803547
(43) Date de publication de la demande: 10.01.2001
(73) Titulaire: COFLEXIP, 75116 Paris (FR)
(72) Inventeur: DO, Anh, Tuan, F-95240 Cormeilles-en-Parisis (FR)
(74) Mandataire: Bertrand, Didier
(86) Numéro de dépôt international: FR9900239
(87) Numéro de publication internationale: WO9949259

(56) Documents cités:
- FR-A- 2 158 731
- FR-A- 2 430 400
- FR-A- 2 538 077
- US-A- 2 129 110

## Description

La présente invention concerne un profilé composite ultra-dense pour armure de conduite flexible, du type comprenant des mèches filamentaires longitudinales à hautes caractéristiques mécaniques, telles que des fibres de carbone, disposées au sein d'une matrice en matière thermoplastique ou thermodurcissable, sous forme d'un ruban plat de section sensiblement rectangulaire.

On connaît par les documents FR 2 739 673 A et FR 2 739 674 A, dont on incorpore ici l'enseignement par référence, des armures à base de bande tissée, pour conduite flexible notamment utilisée en mer profonde dans l'industrie pétrolière. Cette bande est réalisée préférentiellement à base de fibres de résine aramide ("Kevlar"), quoique d'autres matières de fibres ne soient pas exclues. D'autre part, on connaît aussi des profilés en matériau plastique composite renforcé par des fibres (profilés FRP "fiber reinforced plastic") constitués notamment par des mèches filamentaires ("rovings") de fibres parallèles juxtaposées et contenues dans une matrice de matière thermoplastique (telle que du polyamide) ou thermodurcissable (telle qu'une résine époxy), ladite matrice étant continue longitudinalement et transversalement à l'axe des mèches filamentaires, la matrice enveloppant de façon continue chaque filament de manière à retenir les filaments entre eux. Les fibres utilisées sont généralement des fibres de verre ou d'aramide. Mais compte tenu d'inconvénients rencontrés par exemple avec les fibres de verre dans certaines conditions extrêmes d'utilisation (épaisseur relativement forte des rubans obtenus pouvant conduire à des ruptures de fibres entraînant une déchéance partielle ou totale de l'armure sous certaines contraintes de flexion et/ou de torsion), l'idée d'utiliser des fibres de renforcement à hautes caractéristiques mécaniques, telles que les fibres céramiques ou de carbone, a pris naissance, ces fibres et notamment les fibres de carbone étant réputées pour leur haute ténacité et leur grande inertie chimique, la fibre de carbone étant par ailleurs la plus abordable des fibres à hautes caractéristiques mécaniques.

Toutefois, l'utilisation de fibres telles que les fibres à hautes caractéristiques mécaniques, telles que les fibres de carbone, pour des armures de conduite flexible engendre des difficultés que la présente invention a pour but de résoudre.

Ce but est atteint dans le cadre de l'invention grâce à un profilé composite ultra-dense pour armure de conduite flexible, du type comprenant des mèches filamentaires longitudinales de fibres à hautes caractéristiques mécaniques, telles que les fibres de carbone, disposées au sein d'une matrice en matière thermoplastique ou thermodurcissable, sous forme d'un ruban plat de section sensiblement rectangulaire, dont au moins une des faces supérieure ou inférieure est renforcée par un film solidarisé à ladite face, sur sensiblement toute sa largeur et sur sensiblement toute sa longueur.

On s'est en effet aperçu que par cette mesure d'apparence simple, il est possible de remédier au défaut de résistance au cisaillement transverse (résistance au déchirement) caractéristique d'un ruban plat ultra-dense du type considéré à base de fibres de carbones, de faible épaisseur (typiquement inférieure à 1 mm) pour pouvoir être enroulé autour d'un noyau cylindrique dont le diamètre peut être de l'ordre de 100 mm seulement. La torsion et la flexion imposées à un tel profilé plat mince lors d'un enroulement sur un faible diamètre, ou lors d'une compression axiale du flexible risquent de donner naissance à des déchirements longitudinaux au sein du profilé, qui se propagent facilement dans tout le profilé. Le film de l'invention empêche le déchirement de naître ou à tout le moins de se propager. Il permet donc des enroulements sur des diamètres faibles et améliore la résistance au flambage de l'armure (lors du phénomène couramment appelé effet de fond inverse ou à la compression sous l'effet de la pression externe exercée aux extrémités du flexible). L'épaisseur du film selon l'invention est de l'ordre du dixième de celle du profilé.

Le film recouvre ladite face de manière continue ou même discontinue sur sa longueur, et de manière continue sur sa largeur.

Le film peut être un film plastique, soit homogène, soit contenant des fibres qui peuvent être courtes et constituer un renfort discontinu ("mat") ou être longues et constituer un renfort continu (tissu ou non-tissé imprégnés). La solidarisation du film est obtenue par gainage (adhérent ou non adhérent) complet autour du profilé, ou, quand elle n'intéresse que certaines faces du profilé, elle se fait par collage, ou par stratification simultanée avec la matière thermoplastique ou thermodurcissable lors du procédé de fabrication du profilé.

Le ruban peut être recouvert de plusieurs épaisseurs de films, identiques ou différents.

Lorsque le film est ou contient un tissu, avantageusement, les deux directions principales du tissu sont disposées obliquement par rapport à 1a direction longitudinale du ruban, en formant un angle de préférence entre 30° et 65° avec cette direction.

Les fibres incorporées au film et/ou formant le tissu sont des fibres choisies pour leurs propriétés spécifiques et notamment leur résistance chimique, le plus généralement dans les matières suivantes : carbone, verre, résine aramide.

L'invention sera mieux comprise grâce à la description suivante, se référant aux dessins annexés sur lesquels :
- la figure 1 est une vue en perspective d'un premier mode de réalisation de profilé conforme à l'invention, le ruban étant recouvert continûment de tissu sur ses deux faces,
- la figure 2 est une vue en perspective d'un deuxième mode de réalisation de profilé conforme à l'invention, le ruban étant d'abord recouvert de tissu sur une face puis gainé par un film,
- la figure 3 est une vue en perspective d'un troisième mode de réalisation de profilé conforme à l'invention, le ruban étant recouvert de tissu sur une face de manière discontinue.

Le profilé 1 de l'invention comprend un ruban plat 2 réalisé en grande longueur avec une section par exemple de 13 mm à 15 mm de largeur et de 0,5 mm à 1,0 mm d'épaisseur. Le ruban comprend des mèches 3 de fibres de carbone continues longitudinales noyées dans une matrice 4 de matière thermoplastique ou thermodurcissable (par exemple de type époxy, le composite étant réalisé par pultrusion ou thermoformage en continu des mèches pré-imprégnées) ; le ruban est de type ultra-dense, c'est-à-dire que le taux de fibres en volume est supérieur à 50%, et de préférence supérieur ou égal à 70%. Cette faible épaisseur et ce taux élevé de fibre en volume permettent au produit final de répondre aux exigences générales imposées par le cahier des charges pour les armures de conduite flexible.

Cependant, si la résistance dans la direction longitudinale est particulièrement satisfaisante, il convient selon l'invention de renforcer le composite dans d'autres directions de l'espace pour absorber les sollicitations transversales induites par la flexion et la torsion. Ceci est obtenu grâce à la solidarisation, sur au moins une grande face du ruban 2, d'un tissu 5 dont l'angle de tissage et la fibre sont choisis de manière que le produit final reste souple et acquiert un meilleur comportement au cisaillement.

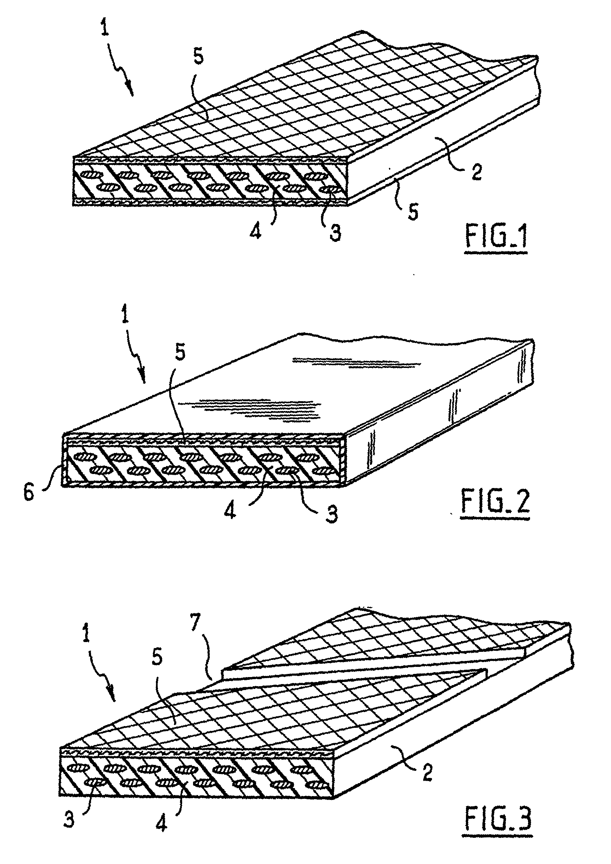

Le tissu, d'une épaisseur de préférence inférieure à 0,1 mm, peut être disposé sur une seule face, intrados ou extrados de l'armure, ou sur les deux faces (figure 1), le cas échéant suivi du gainage par un film mince 6 (figure 2). Le tissu recouvre de préférence toute la largeur du ruban, et s'étend sur la longueur de celui-ci éventuellement avec des discontinuités 7 qui n'altèrent pas sa fonction. De telles discontinuités peuvent par exemple être formées obliquement par rapport au ruban, et la longueur de la discontinuité est par exemple inférieure à 10 mm, alors que la longueur des parties continues est de l'ordre de 10 à 100 mm.

Le tissu peut être simplement collé. Il peut aussi être intégré lors du processus de fabrication du profilé. Pour un ruban en matière thermoplastique, le tissu, enduit ou non, peut être posé par un système de calandrage en continu. Pour un ruban en matière thermodurcissable, la pultrusion ou le thermoformage classiques en continu permettent sans difficulté d'ajouter un ou plusieurs stratifiés à base de tissu.

Le tissu peut être disposé avec sa trame ou sa chaîne dans la direction longitudinale du profilé, mais il est préférable, si l'on veut donner une meilleure souplesse au produit final et surtout mieux absorber les cisaillements en utilisant la plupart des fibres, de disposer le tissu obliquement, ses deux directions principales faisant le même angle compris entre +/- 30° et +/- 65° avec la direction longitudinale.

La fibre utilisée pour le tissu peut être choisie en fonction de particularités recherchées. Par exemple, la fibre de verre permet d'isoler le carbone, et d'éviter le couplage avec les aciers, donc la corrosion galvanique. La fibre aramide permet aussi l'isolation électrique ; de plus, cette fibre imprégnée avec une matière thermodurcissable ou thermoplastique donne à l'armure finale des propriétés tribologiques remarquables.

Le film 6 peut aussi être utilisé seul, c'est-à-dire sans tissu 5. Le film 6 est avantageusement gainé par extrusion, par exemple de polyoléfines (polyéthylène, polypropylène), de polyuréthane ou de polyamide. L'épaisseur du film 6 tient compte des qualités physiques du plastique utilisé, et est avantageusement de l'ordre de 0,05 mm à 0,1 mm. Des essais menés avec un profilé de fibres de carbones imprégnées de résine époxy, de section 13 x 0,9 mm, gainé de polyuréthane, ont montré que le profilé endurait une torsion d'au moins 3 tours/mètre sans endommagement.

Un film, par exemple en "Mylar" (marque de Dupont de Nemours) peut aussi être collé comme le tissu 5, sur une seule face ou les deux faces. On peut aussi utiliser un film-mat (thermoplastique renforcé de fibres courtes ou discontinues), comme celui connu sous le nom de "Tyvek" (marque de Dupont de Nemours).

Selon une autre technique, on peut recouvrir le profilé composite imprégné mais encore non durci avec un mat non imprégné, puis conduire l'ensemble dans l'enceinte de durcissement pour la réticulation de l'ensemble.

On peut associer plusieurs de ces techniques en recouvrant le profilé composite respectivement d'un tissu de fibres longues, puis d'un mat puis d'un film proprement dit. On peut intervertir le tissu de fibres longues et le mat.

Dans une autre forme de réalisation, non représentée, le tissu 5 peut être remplacé par un enroulement d'une fibre autour du ruban plat 2, l'angle d'enroulement du fil étant compris entre 80° et 90°, et, de préférence, de 89°.

## Revendications

1. Profilé composite ultra-dense pour armure de conduite flexible, du type comprenant des mèches filamentaires longitudinales (3) de fibres à hautes caractéristiques mécaniques, telles que les fibres de carbone, disposées au sein d'une matrice (4) en matière thermoplastique ou thermodurcissable, sous forme d'un ruban plat (2) de section sensiblement rectangulaire,
**caractérisé en ce qu'**au moins une des faces supérieure ou inférieure du ruban plat (2) est renforcée par un film (5, 6) solidarisé à ladite face, sur sensiblement toute sa largeur et sur sensiblement toute sa longueur.

2. Profilé selon la revendication 1, **caractérisé en ce que** le film (5, 6) est un film plastique dont l'épaisseur est de l'ordre du dixième de celle du profilé.

3. Profilé selon la revendication 1 ou 2, **caractérisé en ce que** le film (5, 6) est renforcé par des fibres.

4. Profilé selon la revendication 3, **caractérisé en ce que** les fibres sont des fibres discontinues formant un mat.

5. Profilé selon la revendication 3, **caractérisé en ce que** les fibres sont des fibres continues formant un non-tissé ou un tissu.

6. Profilé selon la revendication 5, **caractérisé en ce que** le tissu (5) est à base de fibres choisies dans les matières suivantes : verre, carbone, résine aramide.

7. Profilé selon l'une quelconque des revendications précédentes, **caractérisé en ce que** le film (5, 6) recouvre ladite face de manière discontinue sur sa longueur.

8. Profilé selon l'une quelconque des revendications 1 à 6, **caractérisé en ce que** le film (5, 6) recouvre ladite face de manière continue sur sa longueur.

9. Profilé selon l'une quelconque des revendications précédentes, **caractérisé en ce que** le film (5, 6) recouvre ladite face de manière continue sur sa largeur.

10. Profilé selon la revendication 5, **caractérisé par** un tissu (5) dont les deux directions principales de tissage sont disposées obliquement par rapport à la direction longitudinale du ruban (2), en formant un angle de préférence entre 30 et 65° avec cette direction.

11. Profilé selon l'une quelconque des revendications précédentes, **caractérisé en ce que** le film (5, 6) est solidarisé à la face du ruban (2) par gainage, par collage, ou par stratification.

12. Profilé selon la revendication 5 ou 6, **caractérisé en ce que** le tissu est constitué par un enroulement d'une fibre autour du ruban plat (2) avec un angle d'enroulement voisin de 90°.

## Patentansprüche

1. Ultradichtes Verbundprofil für die Bewehrung einer flexiblen Rohrleitung, vom Typ mit longitudinalen Fasersträngen (3) aus Fasern mit hoher mechanischer Festigkeit, wie Kohlenstoffasern, die in einer Matrix (4) aus thermoplastischem oder wärmehärtbarem Material angeordnet sind, in Form eines flachen Bandes (2) mit im wesentlichen rechteckigen Querschnitt,
**dadurch gekennzeichnet, daß** mindestens eine der oberen oder unteren Flächen des flachen Bandes (2) im wesentlichen auf ihrer gesamten Breite und im wesentlichen auf ihrer gesamten Länge durch einen an dieser Fläche befestigten Film (5, 6) verstärkt ist.

2. Profil nach Anspruch 1,
**dadurch gekennzeichnet, daß** der Film (5, 6) ein Kunststoffilm ist, dessen Dicke in der Größenordnung eines Zehntels der Dicke des Profils ist.

3. Profil nach Anspruch 1 oder 2,
**dadurch gekennzeichnet, daß** der Film (5, 6) durch Fasern verstärkt ist.

4. Profil nach Anspruch 3,
**dadurch gekennzeichnet, daß** die Fasern diskontinuierlich sind und eine Matte bilden.

5. Profil nach Anspruch 3,
**dadurch gekennzeichnet, daß** die Fasern kontinuierliche Fasern sind, die ein Vlies oder ein Gewebe bilden.

6. Profil nach Anspruch 5,
**dadurch gekennzeichnet, daß** das Gewebe (5) auf der Basis von Fasern ist, die aus den folgenden Werkstoffen ausgewählt sind: Glas, Kohlenstoff, Aramidharz.

7. Profil nach einem der vorangegangenen Ansprüche,
**dadurch gekennzeichnet, daß** der Film (5, 6) die genannte Fläche auf ihrer Länge nicht durchgehend bedeckt.

8. Profil nach einem der Ansprüche 1 bis 6,
**dadurch gekennzeichnet, daß** der Film (5, 6) die Fläche über ihre Länge durchgehend bedeckt.

9. Profil nach einem der vorangehenden Ansprüche,
**dadurch gekennzeichnet, daß** der Film (5, 6) die Fläche über ihre Breite durchgehend bedeckt.

10. Profil nach Anspruch 5,
**gekennzeichnet durch** ein Gewebe (5), dessen beide Hauptwebrichtungen schräg zur Längsrichtung des Bandes (2) angeordnet sind und mit dieser einen Winkel vorzugsweise zwischen 30 und 65° bilden.

11. Profil nach einem der vorangehenden Ansprüche,
**dadurch gekennzeichnet, daß** der Film (5, 6) an der Fläche des Bandes (2) durch Umhüllung, durch Klebung oder durch Beschichtung befestigt ist.

12. Profil nach Anspruch 5 oder 6,
**dadurch gekennzeichnet, daß** das Gewebe besteht aus der Wicklung einer Faser um das flache Band (2) mit einem Wicklungswinkel nahe 90°.

## Claims

1. Ultra dense composite strip for flexible pipe armour, of the type comprising longitudinal rovings (3) of fibres having high mechanical properties, such as carbon fibres, placed within a matrix (4) of thermoplastic or thermosetting material, in the form of a flat tape (2) of approximately rectangular cross section,
**characterized in that** at least one of the faces - the upper face or lower face - of the flat tape (2) is reinforced with a film (5, 6) fastened to the said face over approximately its entire width and over approximately its entire length.

2. Strip according to Claim 1, **characterized in that** the film (5, 6) is a plastic film whose thickness is of the order of one tenth of that of the strip.

3. Strip according to Claim 1 or 2, **characterized in that** the film (5, 6) is reinforced by fibres.

4. Strip according to Claim 3, **characterized in that** the fibres are discontinuous fibres forming a mat.

5. Strip according to Claim 3, **characterized in that** the fibres are continuous fibres forming a nonwoven or a woven.

6. Strip according to Claim 5, **characterized in that** the woven (5) is based on fibres chosen from the following materials: glass, carbon, aramid resin.

7. Strip according to any one of the preceding claims, **characterized in that** the film (5, 6) covers the said face discontinuously over its length.

8. Strip according to any one of the preceding claims 1 to 6, **characterized in that** the film (5, 6) covers the said face continuously over its length.

9. Strip according to any one of the preceding claims, **characterized in that** the film (5, 6) covers the said face continuously over its width.

10. Strip according to Claim 5, **characterized by** a woven (5), the two main weaving directions of which are arranged obliquely with respect to the longitudinal direction of the tape (2), preferably making an angle of between 30° and 65° with this direction.

11. Strip according to any one of the preceding claims, **characterized in that** the fastening of the film (5, 6) to the face of the tape (2) is accomplished by sheathing, by adhesive bonding or by lamination.

12. Strip according to Claim 5 or 6, **characterized in that** the woven consists of a winding of a fibre around the flat tape (2) with an angle of wind close to 90°.
